# EUROPEAN PATENT SPECIFICATION

(11) **EP 2 658 939 B1**
(45) Date of publication and mention of the grant of the patent: **16.06.2021**
(21) Application number: 11811275.4
(22) Date of filing: 28.12.2011
(51) Int. Cl.: C09J 103/04

(54) **STRUCTURAL HYBRID ADHESIVES**
HYBRID-STRUKTURKLEBER
ADHÉSIFS HYBRIDES STRUCTURAUX

(30) Priority: 29.12.2010 US 201061428037 P
(43) Date of publication of application: 06.11.2013
(73) Proprietor: 3M Innovative Properties Company, St. Paul, MN 55133-3427 (US)
(72) Inventor: SALNIKOV, Dmitriy, Minnesota 55133-3427 (US); KROPP, Michael A., Minnesota 55133-3427 (US); GORODISHER, Ilya, Minnesota 55133-3427 (US)
(74) Representative: Vossius & Partner Patentanwälte Rechtsanwälte mbB
(86) International application number: PCT/US2011/067513
(87) International publication number: WO 2012/092332

(56) References cited:
- EP-A1- 1 806 375
- EP-A2- 0 475 321
- WO-A1-2010/091072
- GB-A- 1 460 571
- US-A- 5 143 999
- None

## Description

### Cross Reference To Related Application

This application claims the benefit of U.S. Provisional Patent Application No. 61/428037, filed December 29, 2010.

### Field of the Disclosure

This disclosure relates to adhesives films as described in the present claims.

### Summary of the Disclosure

Briefly, the present disclosure provides adhesive films obtained from an adhesive composition as described in the present claims whereby compositions comprising: a) a base resin comprising an epoxy resin; b) a first epoxy curative; and c) a second epoxy curative; wherein the first and second epoxy curatives are chosen such that the second epoxy curative may remain substantially unreacted in the composition under conditions of temperature and duration that render the first epoxy curative substantially reacted with epoxy resin in the composition. In some embodiments, the first and second epoxy curatives are chosen such that the second epoxy curative remains substantially unreacted in the composition after 24 hours at 72°F and the first epoxy curative becomes substantially reacted with epoxy resin in the composition after 24 hours at 72°F. In some embodiments, the base resin includes no acrylic resin. In some embodiments, the base resin comprises only one type of base resin, which is epoxy resin. In some embodiments, the first epoxy curative is a polymercaptan. In some embodiments, the first epoxy curative has a functionality of greater than 2. In some embodiments, the second epoxy curative is a polyamine.

In another aspect, the present disclosure relates to adhesive compositions comprising: a) a base resin comprising an epoxy resin; b) a first epoxy curative; and c) a second epoxy curative; wherein the first epoxy curative is substantially reacted with epoxy resin in the composition and the second epoxy curative is substantially unreacted in the composition. In some embodiments, the first and second epoxy curatives are chosen such that the second epoxy curative remains substantially unreacted in the composition after 24 hours at 72°F and the first epoxy curative becomes substantially reacted with epoxy resin in the composition after 24 hours at 72°F. In some embodiments, the base resin includes no acrylic resin. In some embodiments, the base resin comprises only one type of base resin, which is epoxy resin. In some embodiments, the first epoxy curative is a polymercaptan. In some embodiments, the first epoxy curative has a functionality of greater than 2. In some embodiments, the second epoxy curative is a polyamine.

In another aspect, the present disclosure relates to adhesive compositions comprising: a) a base resin comprising an epoxy resin, wherein the base resin includes no acrylic resin; b) a first epoxy curative which is a polymercaptan; and c) a second epoxy curative which is a polyamine. In some embodiments, the first and second epoxy curatives are chosen such that the second epoxy curative remains substantially unreacted in the composition after 24 hours at 72°F and the first epoxy curative becomes substantially reacted with epoxy resin in the composition after 24 hours at 72°F. In some embodiments, the base resin comprises only one type of base resin, which is epoxy resin. In some embodiments, the first epoxy curative has a functionality of greater than 2.

In another aspect, the present disclosure relates to a bound adhesive composition obtained by substantially curing both the first and second epoxy curatives of any of the adhesive compositions according to the present disclosure.

In another aspect, the present disclosure provides an adhesive film comprising any of the adhesive compositions herein wherein the first epoxy curative is substantially reacted with epoxy resin in the composition and the second epoxy curative is substantially unreacted as described in the present claims. In another aspect, the present disclosure relates to an adhesive film consisting essentially of the adhesive compositions herein wherein the first epoxy curative is substantially reacted with epoxy resin in the composition and the second epoxy curative is substantially unreacted in the compositon as described in the present claims.

In another aspect, the present disclosure relates to an adhesive comprising: a) an adhesive layer comprising any of the adhesive compositions according to this disclosure, wherein the first epoxy curative is substantially reacted with epoxy resin in the composition and the second epoxy curative is substantially unreacted in the composition; and b) a scrim embedded in the adhesive layer. In another aspect, the present disclosure provides an adhesive film comprising: a) an adhesive layer consisting essentially of any of the adhesive compositions according to the present claims , wherein the first epoxy curative is substantially reacted with epoxy resin in the composition and the second epoxy curative is substantially unreacted in the composition; and b) a scrim embedded in the adhesive layer.

### Detailed Description

The present disclosure provides a high strength structural hybrid adhesive material. In the structural hybrid, two polymer networks are formed sequentially. The first network provides structural integrity to the curable structural adhesive film. The second network, typically a thermosetting resin, can be cured after the adhesive film is applied to provide the strength of a structural adhesive.

The resulting cured material can be an interpenetrating network or a multi-phase network. The first polymer network can either be polymeric and blended with the second resin or functional and reacted in the presence of the second resin.

The present disclosure provides a high strength structural hybrid adhesive material and method that does not require substantial energy input during the adhesive film forming step.

The invention is a two step reactive system that includes a base resin component that reacts rapidly with a sufficient amount of a first component to provide a film adhesive. The invention includes a latent catalyst or curative for the remaining base resin that can be activated to provide a structural adhesive. The first component reaction and chemistry are chosen to maintain the latency of the uncured resulting film. The film forming step can occur either on a web or on the substrate to be bonded. In some embodiments, the structural hybrid adhesive contains only one type of base resin, e.g., an epoxy resin. In some embodiments, the structural hybrid adhesive contains only epoxy resin as a base resin. In some embodiments, the structural hybrid adhesive contains only one resin as a base resin. In some embodiments, the structural hybrid adhesive contains only one epoxy resin as a base resin. In some embodiments, the base resin includes no acrylic resin.

This method allows for the use of the epoxy resin in both the film forming and thermosetting steps so strength is not compromised. Because of the low temperature processing, a variety of latent curative or catalysts become available for the second thermosetting step. Furthermore, thick, opaque and pigmented films are possible to process.

In one aspect, the present disclosure provides a mixed curative that includes at least one rapid-reacting curative and at least one latent curative.

Any suitable epoxy resin may be used in the practice of the present disclosure.

Any suitable rapid-reacting curative may be used in the practice of the present disclosure. Any suitable latent curative may be used in the practice of the present disclosure. In some embodiments, the latent curative remains substantially unreacted with an epoxy resin under conditions of time and temperature sufficient to substantially react the rapid-reacting curative with the epoxy resin, and the latent curative will substantially react with the epoxy resin under more extensive conditions of time and temperature.

In one aspect, the present disclosure provides a method of blending an uncured epoxy resin with the mixed curative according to the present disclosure and substantially reacting (curing) the epoxy resin with the rapid-reacting curative while leaving the latent curative substantially unreacted (uncured), to form a structural hybrid adhesive material. In some embodiments, the method includes forming a sheet or film of the blend prior to substantially reacting (curing) the epoxy resin with the rapid-reacting curative. In some embodiments, the method includes forming a shaped article of the blend prior to substantially reacting (curing) the epoxy resin with the rapid-reacting curative. In some embodiments, the method includes forming a shaped article of the blend after substantially reacting (curing) the epoxy resin with the rapid-reacting curative. Shaped articles may include extruded shapes.

The adhesive is provided as a film as described in the present claims. Typically, the rapid-reacting curative in the film is substantially cured and the latent curative is substantially uncured. In some embodiments, the film is supplied on a liner. In some embodiments, the film is supplied as a freestanding film without a liner. In some embodiments, the film includes a barrier layer, such as a layer of fluoropolymer. In some embodiments, the film includes a scrim. In some embodiments, the film includes a non-woven scrim. In some embodiments, the film includes a scrim. In some embodiments, the film includes a woven scrim.

In some embodiments, the adhesive is provided as kit comprising two liquid parts: a first part including a curable epoxy resin and a second part including the mixed curative according to the present disclosure.

As used herein, the terms "substantially unreacted" or "substantially uncured" typically means at least 70% unreacted or uncured, but more typically means at least 80% unreacted or uncured and more typically means at least 90% unreacted or uncured. As used herein, the terms "substantially reacted" or "substantially cured" typically means at least 70% reacted or cured, but more typically means at least 80% reacted or cured and more typically means at least 90% reacted or cured.

Objects and advantages of this disclosure are further illustrated by the following examples, but the particular materials and amounts thereof recited in these examples, as well as other conditions and details, should not be construed to unduly limit this disclosure.

### Examples

Unless otherwise noted, all reagents were obtained or are available from Aldrich Chemical Co., Milwaukee, WI, or may be synthesized by known methods.

The following abbreviations are used to describe the examples:
- °C:: degrees Centigrade
- °F:: degrees Fahrenheit
- cm:: centimeters
- g/m²:: grams per square meter
- kgcw:: kilograms per centimeter width
- kPa:: kilopascals
- MPa:: Megapascals
- mg:: milligrams
- mil:: 10⁻³ inches
- mm:: millimeters
- mm/min:: millimeters per minute
- piw:: pounds per inch width
- -inch:: 10⁻⁶ inches
- m:: micrometers
- oz/yd²:: ounces per square yard
- psi:: pounds per square inch
- rpm:: revolutions per minute

### Materials Used:

A-2014: A modified polyamine curing agent, available under the trade designation "ANCAMINE 2014AS", from Air Products and Chemicals Inc., Allentown, Pennsylvania.
A-2337: A modified aliphatic amine curing agent, available under the trade designation "ANCAMINE 2337S", from Air Products and Chemicals Inc.
ADH: Adipic dihydrazide
AF-163: A structural adhesive film, available under the trade designation "SCOTCH-WELD STRUCTURAL ADHESIVE FILM AF-163-2K, 0.06 WEIGHT", from 3M Company, St. Paul, Minnesota.
AF-191: A structural adhesive film, available under the trade designation "SCOTCH-WELD STRUCTURAL ADHESIVE FILM AF-191 K, 0.08 WEIGHT", from 3M Company.
AF-3024: A structural core splice adhesive film, available under the trade designation "SCOTCH-WELD STRUCTURAL CORE SPLICE ADHESIVE FILM AF-3024", from 3M Company. AF-3109: A structural adhesive film, available under the trade designation "SCOTCH-WELD STRUCTURAL ADHESIVE FILM AF-3109-2K, 0.085 WEIGHT", from 3M Company.
B-131: isodecyl benzoate plasticizer, available under the trade designation "BENZOFLEX 131", from Genovique Specialties Corporation, Rosemont, Illinois.
C-2P4MZ: An epoxy resin hardener, available under the trade designation "CUREZOL 2P4MZ", from Air Products and Chemicals Inc.
C-17Z: An epoxy resin hardener, available under the trade designation "CUREZOL C-17Z", from Air Products and Chemicals Inc.
C-UR2T: An epoxy resin hardener, available under the trade designation "CUREZOL UR2T" from Air Products and Chemicals Inc.
CG-1400: A micronized dicyandiamide, having an approximate amine equivalent weight of 21 grams/equivalent, available under the trade designation "AMICURE CG-1400", from Air Products and Chemicals, Inc.
DEH-85: An unmodified bis-phenol-A hardener having an active hydrogen equivalent weight of approximately 265 grams/equivalent, available under the trade designation "DEH-85", from Dow Chemical Company, Midland, Michigan.
DER-332: A bisphenol-A epoxy resin having an approximate epoxy equivalent weight of 174 grams/equivalent, available under the trade designation "D.E.R. 332", from Dow Chemical Company.
DU-40: Unexpanded thermoplastic microspheres, available under the trade designation "EXPANCEL 461 DU40" from AkzoNobel N.V., Amsterdam, Netherlands.
EPON 828: A bisphenol-A polyepoxide resin having an approximate epoxy equivalent weight of 188 grams/equivalent, available under the trade designation "EPON 828", from Hexion Specialty Chemicals, Columbus, Ohio.
HINP: Hexakis(imidazole) nickel phthalate.
IPDH: Isophthaloyl dihydrazide, having an amine equivalent weight of 49.2 grams/equivalent, available from TCI America, Portland, Oregon.
MEK: Methyl ethyl ketone.
MX-120: A diglycidyl ether of bisphenol-A epoxy resin containing 25 weight percent butadiene-acrylic co-polymer core shell rubber having an approximate epoxy equivalent weight of 243 grams/equivalent, available under the trade designation "KANE ACE MX-120", from Kaneka Texas Corporation, Pasadena, Texas.
MX-125: A diglycidyl ether of bisphenol-A epoxy resin containing 25 weight percent butadiene-acrylic co-polymer core shell rubber having an approximate epoxy equivalent weight of 243 grams/equivalent, available under the trade designation "KANE ACE MX-125", from Kaneka Texas Corporation.
MX-257: A diglycidyl ether of bisphenol-A epoxy resin containing 37.5 weight percent butadiene-acrylic co-polymcr core shell rubber having an approximate epoxy equivalent weight of 294 grams/equivalent, available under the trade designation "KANE ACE MX-257", from Kaneka Texas Corporation.
QX-11: A mercaptan curing agent, available under the trade designation "EPOMATE QX-11", from Japan Epoxy Resins, Inc., Tokyo, Japan.
T-403: A liquid polyether amine, having an amine equivalent weight of 81 grams/equivalent, available under the trade designation "JEFFAMINE T-403", from Huntsman Corporation, The Woodlands, Texas.
TEPA: Tetraethylene pentamine curing agent, available under the trade designation "ANCAMINE TEPA", from Air Products and Chemicals Inc.
TMMP: Trimethylolpropane tris(3-mercaptoproprionate), available from Wako Chemical USA, Inc., Richmond, Virginia.
TTD: 4,7,10-trioxatridecane-1,13-diamine, available from BASF Corporation, Florham Park, New Jersey.
U-52: An aromatic substituted urea (4,4'-methylene bis (phenyl dimethyl urea), having an approximate amine equivalent weight of 170 grams/equivalent, available under the trade designation "OMICURE U-52", from CVC Specialty Chemicals Inc., Moorestown, New Jersey.
Vazo 67: 2,2'-Azobis-(2-methylbutyronitrile), available under the trade designation "VAZO 67" from E.I. du Pont de Nemours & Co.., Inc., Wilmington, Delaware.
XM-B301: A low viscosity acetoacetate functional reactive diluent, having an epoxy equivalent weight of 190 grams/equivalent, available under the trade designation "K-FLEX XM-B301" from King Industries, Inc., Norwalk, Connecticut.

### Preparation of Reactive Thiol and Reactive Amine Compositions (Part-A):

### Reactive Composition A-1:

9.1, 4.5 and 86.4 parts by weight, respectively, of DEH-85, TMMP and QX-11 were added to a 100 gram capacity plastic cup designed for use in a planetary mill. The cup was then secured into a planetary type mill, model "SPEED MIXER MODEL DA 400 FV", available from Synergy Devices Limited, Buckinghamshire, England, and the components mixed at 2,750 rpm and 72°F (22.2°C) until dissolved, approximately five minutes.

### Reactive Composition A-2:

95 parts by weight TTD and 5 parts by weight TEPA were added to a 100 gram capacity plastic cup and mixed at 2,750 rpm and 72°F (22.2°C) on the planetary mill until dissolved, approximately five minutes.

### Reactive Composition A-3:

TEPA as received.

### Reactive Composition A-4:

### T-403 as received.

### Preparation of Epoxy Resin Compositions (Part-B):

Epoxy resins DER-332, Epon-828, MX-120, MX-125, MX-257, plasticizer B-131, microspheres DU-40, and curatives A-2014, A-2337, ADH, CG-1400, C-2P4, C-17Z, C-UR2T, HINP, IPDH, U-52 and VAZO-67 were added, according to the parts by weight listed in Table 1-1 and Table 1-2, to a 100 gram capacity planetary mill type plastic cup. The cup was then secured into the planetary type mill and the components mixed at 2,750 rpm and 72°F (22.2°C) for two minutes.

The cup was removed from the mill, the mixture scrapped from the wall of the cup, and then returned to the planetary mill and mixed for an additional two minutes.

**TABLE 1-1**

| Component | Part B Epoxy Resin Compositions | | | | | | | |
|---|---|---|---|---|---|---|---|---|
| | B-1 | B-2 | B-3 | B-4 | B-5 | B-6 | B-7 | B-8 |
| B-131 | 0 | 0 | 0 | 0 | 3.8 | 0 | 0 | 0 |
| C-2P4MZ | 0 | 0 | 0 | 0 | 0 | 0 | 9.1 | 0 |
| C-17Z | 0 | 0 | 0 | 0 | 0 | 4.8 | 0 | 0 |
| CG-1400 | 4.1 | 4.1 | 4.1 | 4.1 | 4.0 | 0 | 0 | 28.6 |
| C-UR2T | 2.1 | 2.1 | 2.1 | 2.1 | 2.0 | 0 | 0 | 0 |
| DER-332 | 0 | 0 | 27.4 | 27.4 | 26.3 | 28.6 | 27.3 | 0 |
| EPON-828 | 27.4 | 43.0 | 0 | 0 | 0 | 0 | 0 | 66.7 |
| MX-125 | 0 | 0 | 66.4 | 0 | 0 | 66.7 | 63.6 | 0 |
| MX-257 | 66.4 | 50.8 | 0 | 66.4 | 63.9 | 0 | 0 | 0 |
| U-52 | 0 | 0 | 0 | 0 | 0 | 0 | 0 | 4.8 |

**TABLE 1-2**

| | B-9 | B-10 | B-11 | B-12 | B-13 | B-14 | B-15 | B-16 | B-17 |
|---|---|---|---|---|---|---|---|---|---|
| A-2014 | 0 | 0 | 0 | 0 | 0 | 20.0 | 0 | 0 | 0 |
| A-2337 | 0 | 0 | 0 | 0 | 31.0 | 0 | 0 | 0 | 0 |
| ADH | 0 | 1.1 | 0 | 0 | 0 | 0 | 0 | 0 | 0 |
| CG-1400 | 0 | 5.0 | 4.1 | 4.8 | 0 | 0 | 4.1 | 4.1 | 4.1 |
| C-UR2T | 0 | 1.3 | 0 | 0 | 0 | 0 | 0 | 0 | 0 |
| DER-332 | 28.3 | 27.8 | 27.8 | 27.8 | 20.7 | 24.0 | 0 | 0 | 0 |
| DU-40 | 0 | 0 | 0 | 0 | 0 | 0 | 8.5 | 0 | 0 |
| HINP | 5.7 | 0 | 0 | 0 | 0 | 0 | 0 | 0 | 0 |
| IPDH | 0 | 0 | 3.3 | 0 | 0 | 0 | 0 | 0 | 0 |
| MX-120 | 0 | 0 | 0 | 0 | 0 | 0 | 85.0 | 85.0 | 74.7 |
| MX-125 | 66.0 | 64.8 | 64.8 | 64.8 | 48.3 | 56.0 | 0 | 0 | 0 |
| U-52 | 0 | 0 | 0 | 2.6 | 0 | 0 | 2.4 | 2.4 | 2.4 |
| VAZO-67 | 0 | 0 | 0 | 0 | 0 | 0 | 0 | 8.5 | 0 |
| XM-B301 | 0 | 0 | 0 | 0 | 0 | 0 | 0 | 0 | 18.8 |

### Curable Adhesive Film Preparation:

Part-A and Part-B compositions were added to a 20 gram capacity planetary mill type cup according to the rations listed in Table 2, and mixed at 2,750 rpm and 72°F (22.2°C) on the planetary mill for 20 seconds. Each mixture was then knife-over-bed coated between two 5 mil (127.0 m) silicone coated bleached paper release liners, product number "23210 76# BL KFT H/HP 4D/6MH" Loparex, Inc., Iowa City, Iowa, at a bar gap of 8 mil (203.2 m) and 72°F (22.2°C). Each film-liner sandwich, measuring approximately 11.5 by 6 inches (29.2 by 15.2 cm), was held for 24 hours at 72°F (22.2°C), then stored at -20°F (-28.9°C) until used for subsequent testing.

**TABLE 2**

| Example | Part-A | Part-B | Part-B:Part-A Ratio (By Weight) |
|---|---|---|---|
| Example 1 | A-1 | B-1 | 4:1 |
| Example 2 | A-1 | B-2 | 4:1 |
| Example 3 | A-1 | B-3 | 4:1 |
| Example 4 | A-1 | B-4 | 4:1 |
| Example 5 | A-1 | B-5 | 4:1 |
| Example 6 | A-1 | B-6 | 4:1 |
| Example 7 | A-1 | B-7 | 4:1 |
| Example 8 | A-2 | B-8 | 3:1 |
| Example 9 | A-1 | B-9 | 3:1 |
| Example 10 | A-1 | B-10 | 3:1 |
| Example 11-A | A-1 | B-11 | 3:1 |
| Example 11-B | A-1 | B-11 | 4:1 |
| Example 12 | A-1 | B-12 | 4:1 |
| Example 13 | A-1 | B-13 | 4:1 |
| Example 14 | A-1 | B-14 | 3:1 |
| Example 15 | A-1 | B-15 | 4:1 |
| Example 16 | A-1 | B-16 | 4:1 |
| Example 17 | A-3 | B-17 | 8:1 |
| Example 18 | A-4 | B-17 | 3:1 |

### Curable Scrim Supported Adhesive Film Preparation:

The curable film-liner sandwich was removed from the freezer and allowed to reach ambient temperature, 72°F (22.2°C). One liner of the sandwich was removed and replaced by a 0.25 oz/yd² (8 g/m²) nonwoven polyester fabric, from Technical Fiber Products Inc., Newburgh, New York. The liner was then placed over the nonwoven fabric and the sandwich passed through a pair of heated nip rollers set at 140°F (60°C), and a pressure of 20 psi (137.9 kPa), in order to embed the nonwoven fabric into the curable film.

### Substrate Preparation:

### Bare Aluminum.

63 mil and 25 mil (1.60 mm and 0.635 mm) Grade 2024T3 aluminum panels, obtained from Erickson Metals of Minnesota, Inc., Coon Rapids, Minnesota. Sample sizes varied according to the test methods described below.

### Etched & Primed Aluminum.

The bare aluminum panel was soaked in a caustic wash solution, type "ISOPREP 44" from Gallade Chemical Company, Santa Ana, California, for 10 minutes at 185°F (85°C). The panel was then dipped in deionized water several times at 70°F (21.1°C), followed by a continuous spray rinsing with water for approximately 10 more minutes. The panel was then immersed in an etching solution of sulfuric acid and sodium bichromate, commercially available from Brenntag North America, Inc., St. Paul, Minnesota, for 10 minutes at 160°F (71.1°C), after which the panel was spray rinsed with water for approximately 3 minutes at 70°F (21.1°C), allowed to drip dry for another 10 minutes, then dried in an oven for 30 minutes at 54°C. The etched panel was then anodized in a bath of 85% percent phosphoric acid at 72°F (22.2°C) for approximately 25 minutes at a voltage of 15 volts and a maximum current of 100 amps, rinsed with water for approximately 3 minutes at 70°F (21.1°C), allowed to drip dry for another 10 minutes, then dried in an oven for 10 minutes at 66°C. Within 24 hours of being anodized, the panel was treated with a corrosion inhibiting primer, available under the trade designation "SCOTCH-WELD STRUCTURAL ADHESIVE PRIMER, EW-5000" from 3M Company, according to the manufacturer's instructions. The dried primer thickness was between 0.1 - 0.2 mils (2.5 - 5.1 m).

### Abraded & Primed Aluminum.

The etched aluminum panel described above was cleaned with MEK and allowed to dry for 10 minutes at 70°F (21.1°C). The panel was then manually abraded with a nonwoven scouring pad, available under the trade designation "SCOTCH-BRITE SCOURING PAD" from 3M Company, then again cleaned with MEK and allowed to dry for 10 minutes at 70°F (21.1°C). The panel was then etched as described above.

### Testing:

### Overlap Shear Test - Adhesive Film.

One liner was removed from a 1-inch (25.4 mm) by 5/8-inch (15.9 mm) wide strip of curable scrim supported adhesive film and the exposed adhesive manually pressed along the longer edge of a 63 mil (1.60mm) thick, 4-inch by 7-inch (10.16 cm by 17.78 cm) etched and primed aluminum test panel. After removing any trapped air bubbles by means of a rubber roller, the opposing liner was removed another panel of etched and primed aluminum was pressed onto the exposed adhesive, at an overlap of 0.5 inches (12.7 mm). The assembly was then taped together and autoclaved according to one of the cure conditions described below, after which the co-joined panels were cut into seven strips, each measuring 1-inch by 7.5 inches (2.54 by 19.05 cm). The strips were then evaluated for overlap shear strength according to ASTM D-1002, using a tensile strength tester, model "SINTECH 30" from MTS Corporation, Eden Prairie, Minnesota, at 70°F (21.1°C) and a grip separation rate of 0.05 inches/min. (1.27 mm/min.). Six overlap shear test panels were prepared and evaluated per each example.

### Overlap Shear Test - Two Part Adhesive.

Part-A and Part-B adhesive compositions were packaged and sealed into dispenser cartridges in 1:4 ratios, part number "CD 051-04-09", obtained from Controltec Inc., Salem, New Hampshire. The packages were then inserted into an adhesive dispenser, model "DMA-50" was fitted with a static mixing tip, part number "9415", both from 3M Company. Using the appropriate size plungers, approximately 0.5-inch (12.7 mm) length of adhesive mixture was dispensed onto the end of an abraded and primed aluminum panel, 63 mils by 1-inch by 4-inches (1.60 mm by 2.54 cm by 10.16 cm). Glass microspheres, 5.8 - 8.2 mils (147.3 - 208.3 m) average diameter were lightly sprinkled onto the adhesive mixture, and a second abraded and primed aluminum panel was then pressed onto the adhesive at an overlap of 0.5 inchcs (12.7 mm). The panel assembly was held together with small clip binders and bonded per the cure conditions described below. The bonded panel was then evaluated for overlap shear strength according to ASTM D-1002, per the conditions described previously. Two test panels were prepared per each 2-part adhesive sample.

### Floating Roller Peel Strength.

Two primed and etched aluminum panels, one measuring 63 mils by 8-inches by 3-inches (1.60 mm by 20.32 cm by 7.62 cm), the other measuring 25 mils by 10-inches by 3-inches (0.635 mm by 25.4 cm by 7.62 cm), were bonded together as described in "Overlap Shear Test -Adhesive Films" and "Overlap Shear Test - 2-Part Adhesives". Test strips, 0.5 inches (12.7 mm) wide were cut from the bonded panel assembly and evaluated for floating roller peel strength of the thinner substrate, according to ASTM D-3167-76, using a tensile strength tester, model "SINTECH 20" from MTS Corporation, at a separation rate of 6 inches/minute (15.24 cm/min) and at 70°F (21.1°C). Results were normalized for 1-inch (2.54 cm) wide test strips. Four test panels were prepared and evaluated per each example.

### Open Time Test.

Single abraded and primed aluminum test panels were prepared as described in "Overlap Shear Test - Two Part Adhesive", wherein the adhesive mixture was left exposed for various intervals of 1 to 14 days. A second aluminum panel was abraded and primed within 24 hours of bonding to the first panel, after which an 850 gram weight was placed over the bond, and the assembly cured in an oven set to 250°F (121.1°C) for 1 hour. The bonded panel was then evaluated for overlap shear strength, using a tensile strength tester, model "SINTECH 5" from MTS Corporation, according to ASTM D-1002, per the conditions described previously.

### Tack Times

The time it takes after mixing Part A and Part B compositions to form a tacky film and relatively stable tack.

### Volumetric Expansion Test

The curable film-liner sandwich was removed from the freezer, allowed to reach ambient temperature, 72°F (22.2°C), then cut into a 1.5 by 4.0 cm section. One liner of the sandwich was removed and the exposed adhesive manually pressed onto a glass microscopy slide. The opposing liner was removed, the adhesive film dimensions were measured and the film oven cured according to Cure Cyclc #7. After cooling back to ambient temperature the adhesive film dimension were again measured.

### Cure Cycles.

Autoclave Curing. Aluminum test panels were vacuum bagged to a pressure of 28 inches of mercury (94.8 kPa) in an autoclave, model number "ECONOCLAVE 3x5", from ASC Process Systems, Sylmar, California. Autoclave pressure was then increased to 45 psi (310.3 kPa), during which the vacuum bag was vented to the atmosphere once the autoclave pressure surpassed 15 psi (103.4 kPa). Autoclave temperature was then increased at a rate of 4.5°F (2.5°C) and the samples cured for 60 minutes according to one of following cycles:
Cure Cycle #1: (82.2°C).
Cure Cycle #2: 250°F (121.1°C).
Cure Cycle #3: 350°F (176.7°C).

The autoclave was then cooled at a rate of 5°F (2.8°C) per minute back to ambient temperature, during which the autoclave pressure was reduced to ambient atmospheric pressure once the temperature reached 110°F (43.3°C).

Oven Curing. Aluminum test panels were oven cured according to one of following time/temperature cycles:
Cycle #4: 180°F (82.2°C) for 15 hours
Cycle #5: 185°F (85°C) for 15 hours
Cycle #6: 185°F (85°C) for 2 hours
Cycle #7: 250°F (121.1°C) for 2 hours
Cycle #8: 350°F (176.7°C) for 10 minutes

### Test Results

Tack times of curable scrim supported adhesive films, and the corresponding shear strengths and floating Roller Peel Strengths of aluminum test panels bonded at various cure cycles, are listed in Tables 3 and 4. Comparatives A - C were commercially available structural adhesive films AF-163, AF-191 and AF-3109, respectively.

**TABLE 3**

| Example | Tack Time (minutes) |
|---|---|
| Example 1 | 5 |
| Example 2 | 4.5 |
| Example 3 | 4.5 |
| Example 4 | 5 |
| Example 5 | 4.5 |
| Example 6 | 9 |
| Example 7 | 8 |
| Example 8 | 45 |
| Example 17 | 20 |
| Example 18 | 25 |

**TABLE 4**

| Example | Cure Cycle | Overlap Shear Strength | | Floating Roller Peel Strength | |
|---|---|---|---|---|---|
| | | psi (MPa) | Standard Deviation | piw (kgcw) | Standard Deviation |
| Comparative A | 2 | 5,800 (39.99) | Not Applicable | 78 (13.93) | Not Applicable |
| Comparative B | 2 | 5,100 (35.16) | Not Applicable | 30 (5.36) | Not Applicable |
| Comparative C | 2 | 5,917 (40.80) | Not Applicable | 65 (11.61) | Not Applicable |
| Example 1 | 2 | 4,174 (28.78) | 382 (2.65) | 64 (11.43) | 8 |
| Example 2 | 2 | 5,420 (37.37) | 706 (4.87) | 65 (11.61) | 4 |
| Example 3 | 2 | 5,440 (37.51) | 542 (3.74) | 56 (10.00) | 1 |
| Example 4 | 2 | 5,192 (35.80) | 338 (2.33) | 64 (11.43) | 4 |
| Example 5 | 2 | 2,698 (18.60) | 796 (5.49) | 35 (6.25) | 4 |
| Example 6 | 8 | 4,701 (32.41) | 159 (1.10) | Not Applicable | Not Applicable |
| Example 6 | 8 | 4,429 (30.54) | 83 (0.57) | Not Applicable | Not Applicable |
| Example 7 | 4 | 3,882 (26.77) | 343 (2.37) | Not Applicable | Not Applicable |
| Example 7 | 4 | 3,996 (27.55) | 197 (1.36) | Not Applicable | Not Applicable |
| Example 8 | 2 | 4,583 (31.60) | 55 (0.38) | Not Applicable | Not Applicable |
| Example 9 | 3 | 5,621 (38.76) | 132 (0.91) | 40 (7.14) | 2 |
| Example 10 | 2 | 5,927 (40.87) | 325 (2.24) | 57 (10.18) | 1 |
| Example 11 | 3 | 5,147 (35.49) | 434 (2.99) | 56 (10.00) | 1 |
| Example 11-A | 3 | 5,582 (38.49) | 324 (2.23) | 49 (8.75) | 3 |
| Example 12 | 2 | 6,030 (41.58) | 249 (1.72) | 52 (9.29) | 3 |
| Example 13 | 1 | 1,064 (7.34) | 153 (1.056) | 0 | Not Applicable |
| Example 14 | 1 | 569 (3.92) | 59 (0.41) | 0 | Not Applicable |
| Example 17 | 7 | 2,451 (16.90) | 304 (2.10) | Not Applicable | Not Applicable |
| Example 18 | 7 | 1,626 (11.21) | 437 (3.01) | Not Applicable | Not Applicable |

Open Times and Overlap Shear Strengths of various curable 2-part adhesives, mixed in a 4:1 Part-B: Part-A ratio, are listed in Table 5.

**TABLE 5**

| Example | Cure Cycle # | Open Time (Days) | Overlap Shear Strength | |
|---|---|---|---|---|
| | | | psi (Mpa) | Standard Deviation |
| Example 3 | 7 | 10 | 2,479 (17.09) | 45 (0.31) |
| Example 3 | 7 | 14 | 2,169 (14.96) | 239 (1.65) |
| Example 6 | 5 | 1 | 1,363 (9.40) | 444 (3.06) |
| Example 6 | 6 | 2 | 1,441 (9.94) | 77 (0.53) |
| Example 6 | 6 | 3 | 882 (6.08) | 217 (1.50) |
| Example 7 | 5 | 1 | 1,323 (9.12) | 283 (1.95) |
| Example 7 | 6 | 2 | 1,289 (8.89) | 184 (1.27) |
| Example 7 | 6 | 3 | 943 (6.50) | 70 (0.48) |

Volumetric expansion results of selected curable adhesive films are listed in Table 6. Comparative D was commercially available structural adhesive films AF-3024.

**TABLE 6**

| Example | Dimensions (cm) | | | Volume (cm³) | |
|---|---|---|---|---|---|
| | Width | Length | Thickness | Volume | Volumetric Expansion Factor |
| Example 15 Uncured | 1.50 | 4.00 | 0.020 | 0.12 | |
| Example 15 Cured | 1.51 | 4.20 | 0.066 | 0.42 | 3.5 |
| Example 16 Uncured | 1.50 | 4.00 | 0.020 | 0.12 | |
| Example 16 Cured | 1.51 | 4.21 | 0.041 | 0.26 | 2.2 |
| Comparative D Uncured | 1.50 | 4.00 | 0.127 | 0.76 | |
| Comparative D Cured | 1.52 | 4.45 | 0.318 | 2.15 | 2.8 |

Various modifications and alterations of this disclosure will become apparent to those skilled in the art without departing from the scope and principles of this disclosure, and it should be understood that this disclosure is not to be unduly limited to the illustrative embodiments set forth hereinabove.

## Claims

1. An adhesive film obtained from an adhesive composition comprising:
a) a base resin comprising an epoxy resin;
b) a first epoxy curative that is a polymercaptan; and
c) a second epoxy curative that is a polyamine;
wherein the first and second epoxy curatives are chosen such that the second epoxy curative remains substantially unreacted i.e. at least 70 % unreacted in the composition after 24 hours at 22°C (72°F) and the first epoxy curative becomes substantially reacted i.e. at least 70 % reacted with epoxy resin in the composition after 24 hours at 22°C (72°F);
wherein in the film the first epoxy curative is substantially reacted with epoxy resin in the composition and the second epoxy curative is substantially unreacted in the composition.

2. The adhesive film according to claim 1, wherein the base resin includes no acrylic resin.

3. The adhesive film according to any of the preceding claims, wherein the base resin comprises only one type of base resin, which is epoxy resin.

4. The adhesive film according to any of the preceding claims, wherein the first epoxy curative has a functionality of greater than 2.

5. A bound adhesive film obtained by substantially curing both the first and second epoxy curatives of the adhesive composition according to any of the preceding claims.

6. The adhesive film according to any one of claims 1 to 4, further comprising a scrim embedded in the adhesive layer.

7. An adhesive film obtained from an adhesive composition comprising:
a) a base resin comprising an epoxy resin and an acetoacetate-functional resin;
b) a first curative for the acetoacetate-functional resin; and
c) a second curative for the epoxy resin;
wherein the first and second curatives are chosen such that the second curative may remain substantially unreacted i.e. at least 70 % unreacted in the composition under conditions of temperature and duration that render the first curative substantially reacted i.e. at least 70% reacted with the acetoacetate-functional resin in the composition,
wherein in the film the first curative is substantially reacted with the acetoacetate-functional resin in the composition and the second curative is substantially unreacted in the composition.

## Patentansprüche

1. Ein Klebefilm, erhalten aus einer Klebstoffzusammensetzung, umfassend:
a) ein Grundharz, das ein Epoxidharz umfasst;
b) einen ersten Epoxidhärter, der ein Polymercaptan ist; und
c) einen zweiten Epoxidhärter, der ein Polyamin ist;
wobei der erste und der zweite Epoxidhärter so gewählt werden, dass der zweite Epoxidhärter in der Zusammensetzung nach 24 Stunden bei 22 °C (72 °F) im Wesentlichen, d. h. zu mindestens 70 % nicht umgesetzt verbleibt und der erste Epoxidhärter nach 24 Stunden bei 22 °C (72 °F) im Wesentlichen, d. h. zu mindestens 70 %, mit Epoxidharz in der Zusammensetzung umgesetzt ist;
wobei der erste Epoxidhärter in dem Film im Wesentlichen mit Epoxidharz in der Zusammensetzung umgesetzt wird und der zweite Epoxidhärter in der Zusammensetzung im Wesentlichen nicht umgesetzt wird.

2. Der Klebefilm nach Anspruch 1, wobei das Grundharz kein Acrylharz enthält.

3. Der Klebefilm nach einem der vorhergehenden Ansprüche, wobei das Grundharz nur eine Art von Grundharz umfasst, bei dem es sich um Epoxidharz handelt.

4. Der Klebefilm nach einem der vorhergehenden Ansprüche, wobei der erste Epoxidhärter eine Funktionalität von mehr als 2 aufweist.

5. Ein gebundener Klebefilm, erhalten, indem sowohl der erste als auch der zweite Epoxidhärter der Klebstoffzusammensetzung nach einem der vorhergehenden Ansprüche im Wesentlichen gehärtet werden.

6. Der Klebefilm nach einem der Ansprüche 1 bis 4, ferner umfassend einen Gitterstoff, der in die Klebeschicht eingebettet ist.

7. Ein Klebefilm, erhalten aus einer Klebstoffzusammensetzung, umfassend:
a) ein Grundharz, das ein Epoxidharz und ein acetoacetat-funktionelles Harz umfasst;
b) einen ersten Härter für das acetoacetat-funktionelle Harz; und
c) einen zweiten Härter für das Epoxidharz;
wobei der erste und der zweite Härter so gewählt sind, dass der zweite Härter in der Zusammensetzung unter Bedingungen von Temperatur und Dauer, unter denen der erste Härter im Wesentlichen, d. h. zu mindestens 70 %, mit dem acetoacetat-funktionellen Harz in der Zusammensetzung umgesetzt wird, im Wesentlichen, d. h. zu mindestens 70 %, nicht umgesetzt verbleiben kann,
wobei der erste Härter in dem Film im Wesentlichen mit dem acetoacetat-funktionellen Harz in der Zusammensetzung umgesetzt wird und der zweite Härter in der Zusammensetzung im Wesentlichen nicht umgesetzt wird.

## Revendications

1. Film adhésif obtenu à partir d'une composition adhésive comprenant :
a) une résine de base comprenant une résine époxy ;
b) un premier durcisseur époxy qui est un polymercaptan ; et
c) un deuxième durcisseur époxy qui est une polyamine ;
dans lequel les premier et deuxième durcisseurs époxy sont choisis de telle sorte que le deuxième durcisseur époxy demeure sensiblement non transformé par réaction, c'est-à-dire à au moins 70 % non transformé par réaction dans la composition après 24 heures à 22 °C (72 °F) et le premier durcisseur époxy devient sensiblement transformé par réaction, c'est-à-dire à au moins 70 % transformé par réaction avec une résine époxy dans la composition après 24 heures à 22 °C (72 °F) ;
dans lequel dans le film le premier durcisseur époxy est sensiblement transformé par réaction avec une résine époxy dans la composition et le deuxième durcisseur époxy est sensiblement non transformé par réaction dans la composition.

2. Film adhésif selon la revendication 1, dans lequel la résine de base ne comprend pas de résine acrylique.

3. Film adhésif selon l'une quelconque des revendications précédentes, dans lequel la résine de base ne comprend qu'un seul type de résine de base, qui est une résine époxy.

4. Film adhésif selon l'une quelconque des revendications précédentes, dans lequel le premier durcisseur époxy a une fonctionnalité supérieure à 2.

5. Film adhésif lié obtenu en durcissant sensiblement à la fois les premier et deuxième durcisseurs époxy de la composition adhésive selon l'une quelconque des revendications précédentes.

6. Film adhésif selon l'une quelconque des revendications 1 à 4, comprenant en outre un renfort tissé incorporé dans la couche adhésive.

7. Film adhésif obtenu à partir d'une composition adhésive comprenant :
a) une résine de base comprenant une résine époxy et une résine à fonction acéto-acétate ;
b) un premier durcisseur pour la résine à fonction acéto-acétate ; et
c) un deuxième durcisseur pour la résine époxy ;
dans lequel les premier et deuxième durcisseurs sont choisis de telle sorte que le deuxième durcisseur puisse demeurer sensiblement non transformé par réaction, c'est-à-dire à au moins 70 % non transformé par réaction dans la composition dans des conditions de température et de durée qui permettent au premier durcisseur d'être sensiblement transformé par réaction, c'est-à-dire à au moins 70 % transformé par réaction avec la résine à fonction acéto-acétate dans la composition,
dans lequel dans le film le premier durcisseur est sensiblement transformé par réaction avec la résine à fonction acéto-acétate dans la composition et le deuxième durcisseur est sensiblement non transformé par réaction dans la composition.
